# EUROPÄISCHE PATENTSCHRIFT

(11) **EP 3 999 594 B1**
(45) Veröffentlichungstag und Bekanntmachung des Hinweises auf die Patenterteilung: **04.01.2023**
(21) Anmeldenummer: 21743522.1
(22) Anmeldetag: 19.07.2021
(51) Int. Cl.: C09D 5/16, C09D 5/44, C09D 7/40, C09D 167/06

(54) **STYROLFREIE BESCHICHTUNGSZUSAMMENSETZUNG**
COATING COMPOSITION
COMPOSITION DE REVÊTEMENT

(30) Priorität: 23.07.2020 EP 20187544
(43) Veröffentlichungstag der Anmeldung: 25.05.2022
(73) Patentinhaber: PTS GmbH, 48308 Senden (DE)
(72) Erfinder: PLÖGER, Kurt, 48308 Senden (DE); PRIETO, Raul, 48308 Senden (DE)
(74) Vertreter: Bourgeois, Christian
(86) Internationale Anmeldenummer: PCT/EP2021/070170
(87) Internationale Veröffentlichungsnummer: WO 2022/018036

(56) Entgegenhaltungen:
- WO-A1-89/03854
- WO-A1-2011/085443
- WO-A1-2015/158587
- WO-A2-98/57920
- US-A- 4 745 141
- US-A- 4 954 542
- US-A1- 2007 125 990

## Beschreibung

Die Erfindung betrifft eine styrolfreie Beschichtungszusammensetzung für den Schiff-Innenausbau, eine Beschichtung sowie die Herstellung einer Beschichtung.

Im Schiff-Innenausbau werden aus ästhetischen und Gewichtsgründen gern natur- und/oder holzfaserige Werkstoffe eingesetzt. Diese können jedoch nicht ohne Weiteres eingebaut und verwendet werden, da an die eingesetzten Werkstoffe hohe Brandschutzanforderungen gesetzt werden. Hierbei müssen aktuelle Normen wie IMO Res. MSC. 307(88) FTP Code 2010, Anlage 1, Teil 5 erfüllt werden.

Zudem besteht ein hoher Wunsch nach ästhetischen Beschichtungen mit hohem Glanz, die keine Lunker, Nadelstiche oder ähnliche Fehler in der Lackierung aufweisen.

Derzeit werden im Innenausbau von Schiffen meist styrolhaltige Polyesterlacke eingesetzt. Styrol hat jedoch den Nachteil, leicht entzündlich und gesundheitsschädlich zu sein. Hierdurch werden Normen zur Brandschutzprüfung nicht im ausreichenden Maße erfüllt.

Ebenso werden Pulverbeschichtungen eingesetzt, die zwar hohe Brandschutzeigenschaften aufweisen, jedoch geringen Glanz, geringe Brillanz und hohen Schleier zeigen. Darüber hinaus neigen sie zu Vergilbung zu können vergrauen.

Flammschutzmittel sind im Stand der Technik bekannt. Allerdings sind Amine ungeeignet, wenn Anforderungen wie Hochtransparenz ohne Verfärbung gefordert sind, da diese vergilben.

Es war daher Aufgabe der vorliegenden Erfindung, eine Beschichtungszusammensetzung bereitzustellen, die eine hohe Transparenz aufweist, nicht verfärben oder vergilben, und dabei gleichzeitig die aktuellen Brandschutzanforderungen erfüllt. Die Zusammensetzung sollte ohne Styrolbestandteile auskommen. Die Beschichtung der Zusammensetzung sollte klar und ungetrübt sein und Hochglanzlackierungen ermöglichen. Elemente aus natur- und/oder holzfaserigen Werkstoffen sollten durch die Beschichtung schwerer entflammbar sein.

Überraschenderweise konnte eine Beschichtungszusammensetzung der eingangs genannten Art gefunden werden, welche die Nachteile des Standes der Technik nicht aufweist. Demnach wurde eine dreikomponentige (3K) styrolfreie Beschichtungszusammensetzung für den Schiff-Innenausbau gefunden, welche mindestens eine Bindemittelkomponente, mindestens eine Härterkomponente und mindestens eine Katalysatorkomponente umfasst. Die Bindemittelkomponente umfasst 70 bis 95 Gew.-% mindestens eines ungesättigten Polyesters als Bindemittel und 5 bis 30 Gew.-% mindestens eines Flammschutzmittel, das ausgewählt ist aus Halogenphthalsäurealkylester, Halogenbenzoesäurealkylester und ihren Mischungen, bezogen auf das Gesamtgewicht der Bindemittelkomponente. Die Härterkomponente umfasst ein organisches Peroxid. Die Katalysatorkomponente umfasst 5 bis 20 Gew.-% mindestens einer organischen Cobaltverbindung und 80 bis 95 Gew.-% organische Lösemittel, bezogen auf das Gesamtgewicht der Katalysatorkomponente. Die Anteile der Bestandteile der jeweiligen Komponenten addieren sich auf 100 Gew.-%.

Die erfindungsgemäße Beschichtungszusammensetzung ist dreikomponentig. Es ist jedoch nicht ausgeschlossen, dass die Zusammensetzung weitere, zusätzliche Komponenten umfassen kann.

Die erfindungsgemäßen Zusammensetzungen sind hoch transparent und erfüllen die oben genannte IMO-Brandschutznorm. Sie enthalten kein Styrol. Die resultierenden Beschichtungen der Zusammensetzungen sind klar und ungetrübt und ermöglichen Hochglanzlackierungen. Elemente aus natur- und/oder holzfaserigen Werkstoffen sind durch die Beschichtung schwer entflammbar.

Der Polyester der Bindemittelkomponente ist ungesättigt. Vorzugsweise ist er in Anteilen von 75 bis 85 Gew.-% in der Komponente enthalten. In einer bevorzugten Ausführungsform ist der Polyester durch Allylether wie Trimethylolpropan-diallylether (TMPDE) modifiziert.

Das Flammschutzmittel der Bindemittelkomponente ist vorzugsweise in einem Anteil von 15 bis 25 Gew.-% in der Komponente enthalten. Halogenphthalsäurealkylester sind bevorzugte Flammschutzmittel. Der Begriff Halogen in diesen Verbindungen ist insbesondere darauf gerichtet, dass der Benzolring dieser Verbindungen zumindest mit einem Halogenatom substituiert ist. Halogenphthalsäurealkylester bzw. Halogenbenozesäurealkylester können ein bis vier Halogene am Benzolring aufweisen, vorzugsweise vier. Vorzugsweise ist der Phthalsäureester zweifach verestert. Die Alkylgruppen der Phthalsäureester können gleich oder verschieden sein, vorzugsweise gleich. Geeignete Alkylgruppen weisen jeweils 1 bis 20 C-Atome, vorzugsweise drei bis 10 C-Atome, auf. Die Phthalsäure ist vorzugsweise eine o-Phthalsäure. Di(2-ethylhexyl)tetrahalogenphthalat stellt ein bevorzugtes Flammschutzmittel dar. Die Flammschutzmittel sind insbesondere brom- oder chlorhaltig.

Die Bindemittelkomponente kann 0,01 bis 2 Gew.-%, bevorzugt 0,1 bis 1 Gew.-% Additive enthalten, bezogen auf das Gesamtgewicht der Bindemittelkomponente. Hierzu zählen handelsübliche Entschäumer und Verlaufmittel. Geeignete Entschäumer enthalten beispielsweise Methoxy-1-methylethylacetat oder 2,6-Di-tert-butyl-p-kresol. Ein geeignetes Verlaufmittel enthält z.B. Siloxane wie beispielsweise alkylierte Cyclotetrasiloxane. Die Additive werden im Handel häufig in organischen Lösemitteln wie Lösungsmittelnaphtha, Methylacetat, Toluol oder ihren Mischungen angeboten. Lösungsmittelnaphtha, auch als Solvent Naphtha, Schwerbenzol oder Lösungsbenzol bezeichnet, ist ein technisches Benzol, das bei der Fraktionierung von Leichtöl aus der Teerdestillation erhalten wird. Nach DIN 51633 weist Lösungsmittelnaphtha einen Siedebereich von 150 bis 195 °C auf. Die Bindemittelkomponente kann somit 0,5 bis 10 Gew.-%, vorzugsweise 1 bis 4 Gew.-% Lösemittel, bezogen auf das Gesamtgewicht der Bindemittelkomponente, enthalten.

In einer Ausführungsform der Erfindung kann in der Bindemittelkomponente enthalten sein 70 bis 89,49 Gew.-% mindestens eines ungesättigten Polyesters, 10 bis 29,49 Gew.-%, mindestens eines Flammschutzmittels, 0,01 bis 2 Gew.-% Additive und 0,5 bis 10 Gew.-% organische Lösemittel. In einer bevorzugten Ausführungsform der Erfindung enthält die Bindemittelkomponente 70 bis 88,9 Gew.-% mindestens eines ungesättigten Polyesters, 10 bis 28,9 Gew.-% mindestens eines Flammschutzmittels, 0,1 bis 1 Gew.-% Additive und 1 bis 4 Gew.-% organische Lösemittel.

Der Polyester enthält vorzugsweise keine Monomerbestandteile der Formel (1) 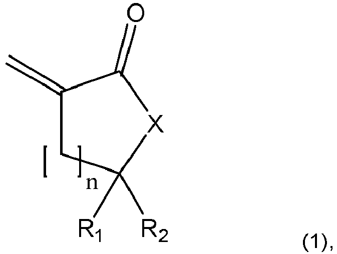 d.h. weniger als 1 Gew.-%, bevorzugt 0 Gew.-%, bezogen auf das Gesamtgewicht der Zusammensetzung, worin bedeuten n = 0-3; R₁ und R₂ unabhängig voneinander H, C1-C20 Alkyl, C3-C20 Cycloalkyl, C6-C20 Aryl, C7-C20 Alkylaryl oder C7-C20 Arylalkyl; X = O, S oder NR₃ mit R₃ = H, C1-C20 Alkyl, C3-C20 Cycloalkyl, C6-C20 Aryl, C7-C20 Alkylaryl, C7-C20 Arylalkyl bedeuten.

Die Bindemittelkomponente hat einen hohen Festkörperanteil. Hierdurch werden Beschichtungen erzielt, die den Bedingungen der Decopaint-Richtlinie 2004/42/EG des Europäischen Parlaments und des Rates vom 21. April 2004 über die Begrenzung der Emissionen flüchtiger organischer Verbindungen auf Grund der Verwendung organischer Lösemittel in diversen Anstrichmitteln und Lacken entsprechen. Der hohe Festkörperanteil führt dazu, die Auftragsmengen an Beschichtungszusammensetzung zu minimieren. Insofern ist es vorteilhaft, wenn die Bindemittelkomponente einen Festkörperanteil von 90 bis 100 Gew.-%, bezogen auf das Gesamtgewicht der Bindemittelzusammensetzung, aufweist. Besonders vorteilhaft sind Anteile von 95 bis 100 Gew.-%. Die Bestimmung des Festkörperanteils erfolgt gemäß DIN EN 53216.

Das Härtungssystem für die polyesterhaltige Zusammensetzung ist ein Cobalt-beschleunigtes Kalthärtungssystem. Dieses umfasst mindestens eine Härterkomponente und mindestens eine Katalysatorkomponente. Zur Kalthärtung ist zwingend die cobalthaltige Komponente erforderlich; eine Kalthärtung von organischen Peroxiden ohne Zusatz von Cobalt funktioniert nicht.

Die Härterkomponente kann organische Lösemittel enthalten. Es ist bevorzugt, dass 75 bis 90 Gew.-% organisches Lösemittel in der Härterkomponente enthalten sind. Besonders bevorzugt umfasst die Komponente 5 bis 30 Gew.-% eines organischen Peroxids und 70 bis 95 Gew.-% organische Lösemittel, bezogen auf das Gesamtgewicht der Härterkomponente. Geeignete Lösemittel werden ausgewählt aus Lösungsmittelnaphtha, Methylacetat, Toluol und ihren Mischungen.

Weiterhin enthält die Härterkomponente mindestens ein organisches Peroxid. Bevorzugt sind Ketonperoxide wie Methylethylketonperoxid oder Benzoylperoxid. Es ist vorzugsweise in Anteilen von 10 bis 25 Gew.-% in der Härterkomponente enthalten.

Die Katalysatorkomponente vorzugsweise 7 bis 18 Gew.-% mindestens einer organischen Kobaltverbindung, bezogen auf das Gesamtgewicht der Katalysatorkomponente. Geeignet ist beispielsweise Cobalt[bis(2-ethylhexanoat)], welches als Cobalt 6 vermarktet wird, Cobaltnaphthenat oder Cobaltoctoat, Cobalt[bis(2-ethylhexanoat)] und Cobaltoctoat sind bevorzugt. Weiterhin enthält die Komponente organische Lösemittel, welche vorzugsweise zu 82 bis 93 Gew.-%, bezogen auf das Gesamtgewicht der Katalysatorkomponente, enthalten sind. Geeignete Lösemittel sind Lösungsmittelnaphtha, Methylacetat, Toluol und ihre Mischungen.

Die erfindungsgemäße Beschichtungszusammensetzung ist styrolfrei. Styrolfrei ist dahingehend zu verstehen, dass vorzugsweise weniger als 2 Gew.-% Styrol, bevorzugt weniger als 1 Gew.-% Styrol, besonders bevorzugt weniger als 0,5 Gew.-% Styrol und ganz besonders bevorzugt weniger als 0,1 Gew.-% Styrol in der Beschichtungszusammensetzung enthalten sind. In einer ganz besonders bevorzugten Ausführungsform der Erfindung ist gar kein Styrol enthalten. Styrol in diesem Sinne ist sowohl Styrol an sich, bspw. als Lösemittel, als auch ein Monomer einer (co-)polymeren Verbindung.

Die Beschichtungszusammensetzung enthält vorzugsweise weder (Meth)acryloyl-Derivative noch (Meth)allyloxy-Derivative. Dies bedeutet, dass weniger als 1 Gew.-% dieser Derivate in der Zusammensetzung enthalten sind, vorzugsweise sind sie gar nicht enthalten.

Zur Nutzung der dreikomponentigen Beschichtungszusammensetzung werden Bindemittelkomponente und Härterkomponente getrennt voneinander zusammengegeben und miteinander verrührt. Das Massenverhältnis von Bindemittelkomponente zu Härterkomponente beträgt vorzugsweise 30:1 bis 1:1, bevorzugt 15:1 bis 5:1. Das Massenverhältnis von Härterkomponente zu Katalysatorkomponente beträgt vorzugsweise 20:1 bis 1:1, bevorzugt 15:1 bis 5:1.

Ein weiterer Gegenstand der Erfindung ist die Verwendung der dreikomponentigen Beschichtungszusammensetzung für die flammschutzhemmende Beschichtung von Elementen im Schiff-Innenausbau. Elemente sind aus natur- und/oder holzfaserigen Werkstoffen. Hierzu zählen Wandverkleidung, Fußböden, Türen, Armaturen, Möbel.

Ein weiterer Gegenstand der Erfindung ist ein Verfahren zur Herstellung der erfindungsgemäßen Beschichtungszusammensetzung. Hierbei werden die einzelnen Bestandteile der jeweiligen Komponenten zusammengegeben, idealerweise unter Rühren. Anschließend, etwa zur Anwendung beim Verarbeiter, erfolgt das Zusammenführen der Komponenten, bevorzugt unter Rühren.

Je nach Anwendung kann es vorteilhaft sein, dass die erfindungsgemäße, flammschutzhemmende Schicht durch weitere, handelsübliche Beschichtungen ergänzt wird. Hierzu zählen lösemittelfreie, wasserhaltige und lösemittelhaltige Beschichtungszusammensetzungen.

Der Aufbau eines typischen Beschichtungssystems kann beispielsweise mindestens einen Lichtschutzprimer oder Lichtschutzgrund umfassen. Darauf können Beizen zur farblichen Gestaltung aufgetragen sein. Lichtschutzprimer oder Lichtschutzgrund empfehlen sich insbesondere bei hellen Werkstoffen. Anschließend folgt mindestens ein Isoliergrund, unabhängig vom Farbton des Werkstoffs. Es folgt die erfindungsgemäße Beschichtungszusammensetzung. Ein Abschlusslack ("Finish") kann optional aufgebracht sein, um bspw. den Glanz weiter zu erhöhen oder die Farbe zu einzustellen.

Als Isoliergrund und als Abschlusslacke insbesondere für helle Werkstoffe eigenen sich beispielsweise 2K-Polyurethan-Mischungen mit Acrylatharzbindemitteln und aliphatischem Isocyanat als Härter. Für dunkle Werkstoffe können 2K-Polyurethan-Mischungen aus Polyesterpolyol-Bindemitteln und aliphatischen und/oder aromatischen Isocyanaten als Isoliergrund bzw. Abschlusslack herangezogen werde. Die Bindemittelkomponenten dieser Lacksysteme können übliche phosphathaltige Flammschutzmittel sowie Celluloseacetatbutyrat enthalten.

Zu den hellen Werkstoffen zählen etwa Ahorn, Eiche, Birke. Dunkle Werkstoffe sind beispielsweise Teak, Mahagoni, Walnuss.

Die erfindungsgemäße Zusammensetzung sowie die Zusammensetzungen der weiteren Schichten kann mit üblichen, dem Fachmann bekannten industriellen Verarbeitungsmethoden aufgetragen werden. Hierzu zählen Spritzen, Gießen und Walzen. Die Nass-Schichtdicke der Zusammensetzung liegt vorzugsweise im Bereich von 125 µm bis 150 µm. Dies ergibt üblicherweise eine Trockenmasse von etwa 125 g bis 150 g pro m².

Eine aufgetragene Schicht wird zunächst getrocknet, bevor eine weitere Schicht aufgebracht wird. Die Trocknung kann bei Temperaturen von mind. 15 °C bis 50 °C erfolgen, wobei Raumtemperatur ausreichend ist. Insofern ist dies ein Verfahren zur Herstellung einer Beschichtung ein weiterer Gegenstand der Erfindung.

Nach der Trocknung der jeweiligen Schichten kann die Beschichtung geschliffen werden.

### Beispiele

### Beispiel A

Es wurden einige polyesterhaltige Lacke herangezogen und ihre Flammschutzeigenschaft untersucht, welche Katalysator- und Härterbestandteile enthielten. Hierzu wurden thermische Analysen (TA) nach DIN 51005 vorgenommen. Die Lacke wurden in Form von Lackfilmen in einer N₂-Atmosphäre (1 bar) ab 50 °C auf 600 °C mit einer Steigerung von 20 K/min erhitzt. Nach dem Abkühlen wurde der Rückstand gravimetrisch ermittelt. Hierbei wird davon ausgegangen, dass ein höherer Rückstand eine bessere Flammschutzwirkung erzielt.

Hierbei wurden folgende Flammschutzmittel eingesetzt:
FSM1: Halogenierter Phosphorsäureester, Phosphor: 15 Gew.-%, Chlor: 25 Gew.-%
FSM2: Tris(halogen)propylphosphat 1; Phosphor: 7 Gew.-%, Chlor: 65 Gew.-%
FSM3: Tris(halogen)propylphosphat 2; Phosphor: 7 Gew.-%, Chlor: 65 Gew.-%
FSM4: 9,10-Dihydro-9-oxa-10-phosphaphenanthren-10-oxid enthaltendes, OH-funktionelles Comonomer
FSM5: Halogenbenzoesäurealkylester
FSM6: Halogenphthalsäurealkylester

**Tabelle 1. Testung verschiedener Flammschutzmittel**

| **Beispiel** | **Flammschutzmittel** | **Anteil Flammschutzmittel** | **Rückstände nach TA** |
|---|---|---|---|
| A1: Handelsüblicher Lack der Fa. Büsing & Fasch, styrolhaltig | unbekannt | unbekannt | 12,04 % |
| A2 | FSM1 | 10 | 8,30 % |
| A3 | FSM1 | 20 | 9,48 % |
| A4 | FSM2 | 10 | 11,39 % |
| A5 | FSM2 | 20 | 11,80 % |
| A6 | FSM3 | 10 | 11,55 % |
| A7 | FSM3 | 20 | 12,20 % |
| A8 | FSM4 | 10 | 9,40 % |
| A9 | FSM4 | 20 | 12,93 % |
| A10 | FSM5 | 10 | 12,33 % |
| A11 | FSM5 | 20 | 13,04 % |
| A12 | FSM6 | 10 | 13,17 % |
| A13 | FSM6 | 20 | 15,69 % |

Die Bestimmung durch thermische Analyse zeigt, dass insbesondere die Flammschutzmittel 5 und 6 eine hohe Flammschutzeigenschaft aufweisen. Zudem sind sie styrolfrei.

### Beispiel B

Die folgenden Lacke wurden hergestellt. Die jeweiligen Komponenten wurden durch Vermischen der einzelnen Bestandteile hergestellt. Danach wurde zunächst die Härter- und anschließend die Katalysator-Komponente zur Bindemittel-Komponente gegeben.

Die Härterkomponente enthält 20 Gew.-% organisches Peroxid und 80 Gew.-% organisches Lösemittel. Die Katalysatorkompoente enthält 13 Gew.-% einer organischen Cobalt-Verbindung und 87 Gew.-% organische Lösemittel.

Die V-Versuche sind nicht-erfindungsgemäße Vergleichsversuche.

**Tabelle 2. Beschichtungsmittelzusammensetzungen.**

| | **V1** | **V2** | **V3** | **B1** | **B2** | **B3** | **B4** |
|---|---|---|---|---|---|---|---|
| **Polyester, ungesättigt** | 100 | 90 | 90 | 90 | 85 | 80 | 80 |
| **Tris(halogen)propylphosphat** | | 10 | | | | | |
| **halogenierter Phosphphorsäureester** | | | 10 | | | | |
| **Tetrahalogenphthalsäurealkylester** | | | | 10 | 15 | 20 | 10 |
| **DOPO** | | | | | | | 10 |
| | | | | | | | |
| **Härter-Komponente** | 10 | 10 | 10 | 10 | 10 | 10 | 10 |
| **Katalysator-Komponente** | 2 | 2 | 2 | 2 | 2 | 2 | 2 |

| | | | | | | | |
|---|---|---|---|---|---|---|---|
| DOPO: 9,10-Dihydro-9-oxa-10-phosphaphenanthren-10-oxid enthaltendes, OH-funktionelles Comonomer | | | | | | | |

Die erfindungsgemäßen Lacke sind hochtransparent und zeigen keine Verfärbungen oder Trübungen. Zudem weisen sie keinen unangenehmen, stechenden Geruch auf. Anschließend wurden die Erfordernisse IMO Res. MSC. 307(88) FTP Code 2010, Anlage 1, Teil 5 untersucht. Hierbei wurden folgende Kriterien getestet:
Wärme für anhaltendes Brennen Qsb (MJ/m²); Sollwert >1,5
kritischer Wärmefluss bei Verlöschen CFE (kW/m²); Sollwert >20,0
Max. Wärmefreisetzungsrate Qp (kW); Sollwert <4,0
Freigesetzte Gesamtwärmemenge Qt (MJ); Sollwert <0,7

**Tabelle 3. Werte nach IMO Res. MSC. 307(88) FTP Code 2010, Anlage 1, Teil 5.**

| | **V1** | **V2** | **V3** | **B1** | **B2** | **B3** | **B4** |
|---|---|---|---|---|---|---|---|
| **Qsb in MJ/m²** | 2,62 | 2,7 | 2,52 | 3,11 | 2,38 | 2,55 | 2,68 |
| **CFE in kW/m²** | 9,9 | 13,7 | 15,2 | 21,1 | 26,2 | 23,2 | 28,6 |
| **Qp in KW** | 1,59 | 1,55 | 1,63 | 1,03 | 1,67 | 0,95 | 0,78 |
| **Qt in MJ** | 0,215 | 0,225 | 0,223 | 0,127 | 0,151 | 0,122 | 0,101 |

Lediglich die erfindungsgemäßen, phthaltathaltigen Zusammensetzungen B1 bis B4 erreichen die Sollwerte aller vier Kriterien. Die Vergleichsversuche scheitern zumindest bei dem kritischen Wärmefluss bei Verlöschen und dürfen somit im Schiff-Innenausbau nicht eingesetzt werden.

## Patentansprüche

1. Dreikomponentige styrolfreie Beschichtungszusammensetzung für den Schiff-Innenausbau, umfassend mindestens eine Bindemittelkomponente, mindestens eine Härterkomponente und mindestens eine Katalysatorkomponente wobei
die Bindemittelkomponente umfasst
a1) 70 bis 95 Gew.-% mindestens eines ungesättigten Polyesters als Bindemittel und
a2) 5 bis 30 Gew.-% mindestens eines Flammschutzmittels, ausgewählt aus Halogenphthalsäurealkylester, Halogenbenzoesäurealkylester und ihren Mischungen, bezogen auf das Gesamtgewicht der Bindemittelkomponente, und
die Härterkomponente umfasst
mindestens ein organisches Peroxid
die Katalysatorkomponente umfasst
c1) 5 bis 20 Gew.-% mindestens einer organischen Cobaltverbindung,
c2) 80 bis 95 Gew.-% organische Lösemittel,
bezogen auf das Gesamtgewicht der Katalysatorkomponente,
wobei sich die Anteile der Bestandteile der jeweiligen Komponenten auf 100 Gew.-% addieren.

2. Beschichtungszusammensetzung nach Anspruch 1, **dadurch gekennzeichnet, dass** das Massenverhältnis von Bindemittelkomponente zu Härterkomponente 30:1 bis 1:1 beträgt.

3. Beschichtungszusammensetzung nach einem der vorherigen Ansprüche, **dadurch gekennzeichnet, dass** das Massenverhältnis von Härterkomponente zu Katalysatorkomponente 20:1 bis 1:1 beträgt.

4. Beschichtungszusammensetzung nach einem der vorherigen Ansprüche, **dadurch gekennzeichnet, dass** der Polyester modifiziert ist mit Allylether.

5. Beschichtungszusammensetzung nach einem der vorherigen Ansprüche, **dadurch gekennzeichnet, dass** das Flammschutzmittel Halogenphthalsäurealkylester enthält.

6. Beschichtungszusammensetzung nach einem der vorherigen Ansprüche, **dadurch gekennzeichnet, dass** die Bindemittelkomponente weiterhin 0,01 bis 2 Gew.-% Additive wie Entschäumer oder Verlaufmittel enthält.

7. Beschichtungszusammensetzung nach einem der vorherigen Ansprüche, **dadurch gekennzeichnet, dass** der Festkörperanteil der Bindemittelkomponente, bestimmt nach DIN EN 53216, 90 % bis 100 Gew.-%, bezogen auf das Gesamtgewicht der Bindemittelkomponente, beträgt.

8. Beschichtungszusammensetzung nach einem der vorherigen Ansprüche, **dadurch gekennzeichnet, dass** das organische Peroxid aus Methylethylketonperoxid und Benzoylperoxid ausgewählt ist.

9. Beschichtungszusammensetzung nach einem der vorherigen Ansprüche, **dadurch gekennzeichnet, dass** die Härterkomponente umfasst
b1) 5 bis 30 Gew.-% mindestens eines organischen Peroxids und
b2) 70 bis 95 Gew.-% organische Lösemittel,
bezogen auf das Gesamtgewicht der Härterkomponente,

10. Beschichtungszusammensetzung nach Anspruch 9, **dadurch gekennzeichnet, dass** die organischen Lösemittel der ausgewählt werden aus Methylacetat, Toluol und Mischungen davon.

11. Verwendung einer Beschichtungszusammensetzung nach einem der vorherigen Ansprüche für die flammschutzhemmende Beschichtung von Elementen im Schiff-Innenausbau.

12. Beschichtung für den Schiff-Innenausbau, umfassend auf einem Element
c1) ggf. mindestens ein Lichtschutzprimer,
c2) mindestens ein Isoliergrund,
c3) mindestens eine Beschichtungszusammensetzung nach einem der Ansprüche 1 bis 10 und
c4) ggf. mindestens ein Abschlusslack.

13. Beschichtung nach Anspruch 12, wobei vor dem Isoliergrund ein Lichtschutzprimer aufgetragen ist.

14. Verfahren zur Herstellung einer Beschichtung für den Schiff-Innenausbau nach einem der Ansprüche 12 oder 13 durch Auftragen einer Schicht, Trocknen der Schicht, Auftragen einer weiteren Schicht, Trocknen der weiteren Schicht, ggf. Wiederholung von Auftrag und Trocknen.

## Claims

1. A three-component styrene-free coating composition for the interior construction of a ship, comprising at least one binder component, at least one hardener component and at least one catalyst component, wherein
the binder component comprises
a1) 70 to 95 wt% of at least one unsaturated polyester as binder and
a2) 5 to 30 wt% of at least one flame retardant selected from alkyl esters of halophthalic acid, alkyl esters of halobenzoic acid and mixtures thereof, based on the total weight of the binder component, and
the hardener component comprises
at least one organic peroxide,
the catalyst component comprises
c1) 5 to 20 wt% of at least one organic cobalt compound,
c2) 80 to 95 wt% organic solvents,
based on the total weight of the catalyst component,
wherein the proportions of the components of the respective components add up to 100 wt%.

2. The coating composition according to claim 1, **characterized in that** the mass ratio of binder component to hardener component is 30:1 to 1:1.

3. The coating composition according to any one of the preceding claims, **characterized in that** the mass ratio of hardener component to catalyst component is 20:1 to 1:1.

4. The coating composition according to any one of the preceding claims, **characterized in that** the polyester is modified with allyl ether.

5. The coating composition according to any one of the preceding claims, **characterized in that** the flame retardant agent comprises alkyl esters of halophthalic acid.

6. The coating composition according to any one of the preceding claims, **characterized in that** the binder component further contains 0.01 to 2 wt% additives, such as defoamers or leveling agents.

7. The coating composition according to any one of the preceding claims, **characterized in that** the solids content of the binder component determined according to DIN EN 53216 is 90% to 100 wt%, based on the total weight of the binder component.

8. The coating composition according to any one of the preceding claims, **characterized in that** the organic peroxide is selected from methyl ethyl ketone peroxide and benzoyl peroxide.

9. The coating composition according to any one of the preceding claims, **characterized in that** the hardener component comprises
b1) 5 to 30 wt% of at least one organic peroxide and
b2) 70 to 95 wt% organic solvents,
based on the total weight of the hardener component,

10. The coating composition according to claim 9, **characterized in that** the organic solvents are selected from methyl acetate, toluene and mixtures thereof.

11. A use of a coating composition according to any one of the preceding claims for the flame retardant coating of elements in the interior construction of a ship.

12. A coating for the interior construction of a ship, comprising on an element
c1) optionally at least one light protection primer,
c2) at least one insulation primer,
c3) at least one coating composition according to any one of claims 1 to 10 and
c4) optionally at least one finishing lacquer.

13. The coating according to claim 12, wherein a light protection primer is applied before the insulation primer.

14. A method for producing a coating for the interior construction of a ship according to any one of claims 12 or 13 by applying a layer, drying the layer, applying a further layer, drying the further layer, optionally repeating application and drying.

## Revendications

1. Composition de revêtement exempte de styrène à trois composants pour l'aménagement intérieur d'un bateau, comprenant au moins un composant liant, au moins un composant durcisseur et au moins un composant catalyseur
le composant liant comprenant
a1) 70 à 95 % en poids d'au moins un polyester insaturé en tant que liant et
a2) 5 à 30 % en poids d'au moins un agent ignifuge choisi parmi l'ester alkylique d'acide halogénophtalique, l'ester alkylique d'acide halogénobenzoïque et leurs mélanges, par rapport au poids total du composant liant, et
le composant durcisseur comprenant
au moins un peroxyde organique
le composant catalyseur comprenant
c1) 5 à 20 % en poids d'au moins un composé de cobalt organique,
c2) 80 à 95 % en poids de solvants organiques,
par rapport au poids total du composant catalyseur,
dans laquelle les proportions des constituants des composants respectifs s'additionnent pour atteindre 100 % en poids.

2. Composition de revêtement selon la revendication 1, **caractérisée en ce que** le rapport de masse du composant liant au composant durcisseur est de 30:1 à 1:1.

3. Composition de revêtement selon l'une des revendications précédentes, **caractérisée en ce que** le rapport de masse du composant durcisseur au composant catalyseur est de 20:1 à 1:1.

4. Composition de revêtement selon l'une des revendications précédentes, **caractérisée en ce que** le polyester est modifié avec de l'éther allylique.

5. Composition de revêtement selon l'une des revendications précédentes, **caractérisée en ce que** l'agent ignifuge contient de l'ester alkylique d'acide halogénophtalique.

6. Composition de revêtement selon l'une des revendications précédentes, **caractérisée en ce que** le composant liant contient en outre 0,01 à 2 % en poids d'additifs tels que des agents antimousse ou des agents d'écoulement.

7. Composition de revêtement selon l'une des revendications précédentes, **caractérisée en ce que** la teneur en solides du composant liant, déterminée selon la norme DIN EN 53216, est de 90 % à 100 % en poids par rapport au poids total du composant liant.

8. Composition de revêtement selon l'une des revendications précédentes, **caractérisée en ce que** le peroxyde organique est choisi parmi le peroxyde de méthyléthylcétone et le peroxyde de benzoyle.

9. Composition de revêtement selon l'une des revendications précédentes, **caractérisée en ce que** le composant durcisseur comprend
b1) 5 à 30 % en poids d'au moins un peroxyde organique et
b2) 70 à 95 % en poids de solvants organiques,
par rapport au poids total du composant durcisseur.

10. Composition de revêtement selon la revendication 9, **caractérisée en ce que** les solvants organiques sont choisis parmi l'acétate de méthyle, le toluène et leurs mélanges.

11. Utilisation d'une composition de revêtement selon l'une des revendications précédentes pour le revêtement ignifuge d'éléments dans l'aménagement intérieur d'un bateau.

12. Revêtement pour l'aménagement intérieur d'un bateau, comprenant sur un élément
c1) éventuellement au moins un apprêt de protection contre la lumière,
c2) au moins une couche de base isolante,
c3) au moins une composition de revêtement selon l'une des revendications 1 à 10 et
c4) éventuellement au moins un vernis de finition.

13. Revêtement selon la revendication 12, dans lequel un apprêt de protection contre la lumière est appliqué avant la couche de base isolante.

14. Procédé de fabrication d'un revêtement pour l'aménagement intérieur d'un bateau selon l'une des revendications 12 ou 13 par application d'une couche, séchage de la couche, application d'une couche supplémentaire, séchage de la couche supplémentaire, éventuellement répétition de l'application et du séchage.
